Europäisches Patentamt

European Patent Office

Office européen des brevets

(19)

(11) Veröffentlichungsnummer : **0 378 625 B1**

(12) **EUROPÄISCHE PATENTSCHRIFT**

(45) Veröffentlichungstag der Patentschrift :
05.08.92 Patentblatt 92/32

(51) Int. Cl.⁵ : **B29C 65/02,** B29C 37/00,
G05B 19/12

(21) Anmeldenummer : 89907055.1

(22) Anmeldetag : 27.06.89

(86) Internationale Anmeldenummer :
PCT/CH89/00124

(87) Internationale Veröffentlichungsnummer :
WO 90/00112 11.01.90 Gazette 90/02

(54) EINRICHTUNG ZUM VERSCHWEISSEN VON ROHRFÖRMIGEN TEILEN AUS KUNSTSTOFF.

(30) Priorität : 04.07.88 CH 2532/88

(43) Veröffentlichungstag der Anmeldung :
25.07.90 Patentblatt 90/30

(45) Bekanntmachung des Hinweises auf die
Patenterteilung :
05.08.92 Patentblatt 92/32

(84) Benannte Vertragsstaaten :
AT BE CH DE FR GB IT LI LU NL SE

(56) Entgegenhaltungen :
EP-A- 0 020 915
EP-A- 0 151 340
EP-A- 0 189 918
EP-A- 0 191 445
EP-A- 0 254 563
EP-A- 0 284 834
DE-A- 2 326 369
DE-A- 2 804 011
FR-A- 1 518 369
FR-A- 2 093 005
GB-A- 1 011 727
GB-A- 1 438 628
GB-A- 1 549 169
US-A- 3 455 761
US-A- 3 466 020
US-A- 4 008 118
US-A- 4 292 118
Patent Abstracts of Japan, Band 8, nr 76
(M-288) (1513) 9.April 1984, & JP,A, 58222828
(SUMITOMO JUKIKAI KOGYO K.K.)24.Dezem-
ber 1983
Patent Abstracts of Japan, Band 7, nr 283
(M-263) (1428), 16. Dezember 1983, & JP,A,
58158229 (NITSUSEI JIYUSHI KOGYO)20.Sep-
tember 1983

(56) Entgegenhaltungen :
Plastverarbeiter, Band 36, nr. 10 Oktober 1985,
(Spreyer, DE), H. Potente et al.:
"Rechnersteuerung beimHeizelementstumpfschweissen", Seiten 86-94

(73) Patentinhaber : GEORG FISCHER
AKTIENGESELLSCHAFT
Mühlentalstrasse 105
CH-8201 Schaffhausen (CH)

(72) Erfinder : KRAMER, Herbert
Libellenweg 62
W-7700 Singen (DE)
Erfinder : HILPERT, Bruno
Kirchgasse 3
CH-8253 Diessenhofen (CH)

## Beschreibung

Die Erfindung betrifft eine Einrichtung zum Verschweissen von rohrförmigen Teilen aus Kunststoff, gemäß dem Oberbegriff des Anspruchs 1.

Bekannt ist eine Einrichtung zum Verschweissen von rohrförmigen Teilen, bei welcher die aufheizbaren Backen am Innenumfang einen Ringkanal aufweisen, in welchem während bzw. nach dem Schweissvorgang der axial zusammenstossenden, rohrförmigen Teile ein Vakuum erzeugt wird. Dadurch soll das Einfallen des aufgeschmolzenen Materials nach Innen bzw. die Bildung eines inneren Wulstes an der Schweissverbindung verhindert werden. Es hat sich jedoch gezeigt, dass mit diesem Verfahren bzw. mit dieser Einrichtung keine in der Festigkeit einwandfreien und am Innenumfang glatten Schweissverbindungen herstellbar sind.

Weiterhin ist es bekannt (DE-PS 283 0722) zur Verkleinerung von inneren Schweisswülsten am Innenumfang der rohrförmigen Teile eine elastische Einlage anzuordnen, welche gegen den inneren Schweisswulst drückt.

Zum Verschweissen werden jedoch hierbei die stirnseitigen Enden der rohrförmigen Teile durch Anpressen an Heizelemente erwärmt und anschliessend gegeneinander gedrückt. Eine vollkommen wulstfreie Schweissverbindung ist mit diesem Verfahren nicht erreichbar, ausserdem können durch das stirnseitige Erhitzen der Enden der rohrförmigen Teile der Innenraum dieser Teile verschmutzt werden, so dass die erforderliche Sauberkeit bei der Verbindung für Rohrleitungssysteme zur Weiterleitung von Medien mit hohem Reinheitsgrad nicht geeignet ist.

Durch die DE-C2 29 23 205 ist eine Einrichtung der eingangs genannten Art bekanntgeworden, mittels welcher ein wulstfreies, stirnseitiges Schweissen von rohrförmigen Kunststoffteilen möglich ist.

Diese Einrichtung ist jeweils nur für eine Rohrdimension verwendbar. Die Heizeinrichtung weist Metallhalbschalen auf, deren mittlerer Teil zur Stossnaht elektrisch beheizbar ist und der andere Teil an beiden in Längsrichtung gesehenen Enden mit Kühlkammern ausgerüstet ist. Dies erfordert eine aufwendige Bauweise sowie eine Regelung der einzelnen Zonen, was sehr nachteilig ist. Auch kann die Heizzone nach dem Heizvorgang nicht rasch abgekühlt werden, was lange Schweisszeiten ergibt.

Aufgabe der vorliegenden Erfindung ist die Schaffung einer Einrichtung der eingangs genannten Art, mittels welcher eine wulstfreie und feste Verbindung bei rohrförmigen Teilen aus Kunststoff herstellbar ist, wobei die Einrichtung bei einer einfachen Bauweise für eine problemlose Bedienung auch zur Verwendung am Montageort eines Rohrleitungssystems, welches insbesondere auch für die Weiterleitung von Medien mit hohem Reinheitsgrad vorgesehen ist, ausgebildet sein muss. Ausserdem soll die Einrichtung zum Verschweissen rohrförmiger Teile mit jeweils unterschiedlichem Rohrdurchmesser bei geringen Umrüstzeiten, kurzen Schweisszeiten und immer gleichmässig guten Schweissverbindungen verwendbar sein.

Erfindungsgemäss wird diese Aufgabe durch die Merkmale von Anspruch 1 gelöst.

Besonders vorteilhafte Ausgestaltungen der Erfindung sind in den abhängigen Ansprüchen gekennzeichnet.

Durch die direkte Auswahl des für eine Rohrdimension bestimmten Schweissprogrammes beim Aufsetzen der entsprechenden Heizvorrichtung und durch die Anordnung des Kanals für Kühlluft in der Heizvorrichtung mit dem direkt darunter im Gestell befindlichen Ventilator ist ein einfaches und rasches Umrüsten der Einrichtung zum Verschweissen auf andere Rohr-Dimensionen gewährleistet.

Zur Vermeidung von Fehlbedienungen ist es zwar durch die EP-A 01914465 bekannt, ein zur Füllung einer Form mit einem Mehrkomponentenkunststoff erforderliches, von der Form abhängiges, Füllprogramm mittels Stecker zu codieren, doch weist diese Vorrichtung keine Merkmale einer Schweissvorrichtung für rohrförmige Teile auf.

Auch die in der EP-A 0189918 gezeigte Schweissmuffe zum Verbinden von Rohrleitungen mit einem elektrisch aufheizbaren Widerstandsdraht weist einen Codier-Stecker auf, wobei jede mit der Rohrleitung fest verbundene Schweissmuffe einen Codier-Stecker aufweist.

Die Erfindung ist in den beiliegenden Zeichnungen beispielsweise dargestellt und nachfolgend beschrieben.

Es zeigen:

Fig. 1: Eine Teil-Frontansicht einer Einrichtung zum Verschweissen,

Fig. 2: Einen Schnitt entlang der Linie II - II in Fig. 1,

Fig. 3: Einen Teilschnitt entlang der Linie III - III von Fig. 2,

Fig. 4: Einen Teilschnitt einer Ausführungsvariante von Fir. 2, wobei der Schnitt quer durch die Heizvorrichtung verläuft und

Fig. 5: Einen Schnitt entlang der Linie V - V von Fig. 3.

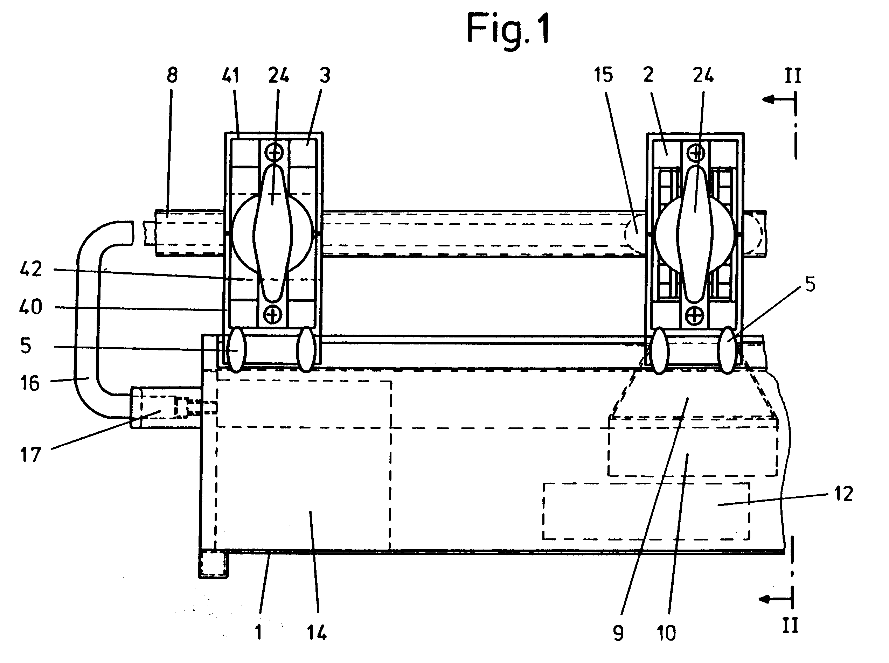

Die Fig. 1 zeigt eine Teil-Frontansicht der Einrichtung mit einem Gestell 1, einer Heizvorrichtung 2 und einer Rohrspannvorrichtung 3, wobei auf der zweiten Seite der Heizvorrichtung 2 eine weitere, nicht dargestelle Rohrspannvorrichtung vorgesehen ist.

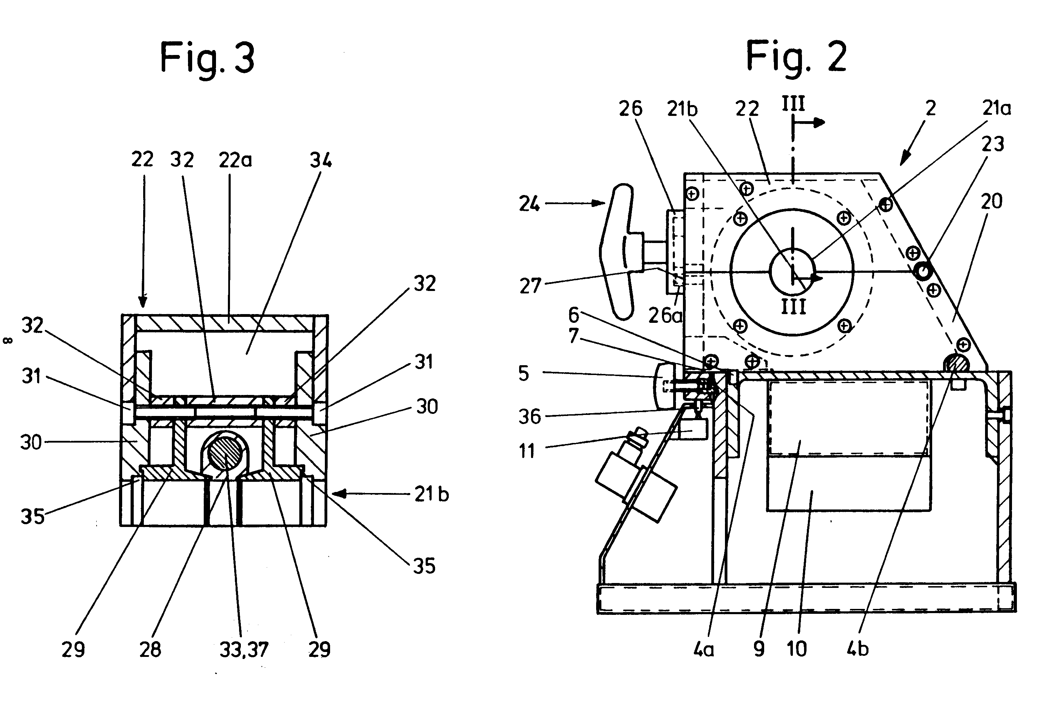

Wie aus Fig. 2 ersichtlich, sind auf der Oberseite des Gestells 1 Führungen 4a, 4b angeordnet, auf welchen die Rohrspannvorrichtungen 3 in Längsrichtung verschiebbar und mittels Klemmvorrichtungen 5 fest mit dem Gestell 1 verbindbar sind.

Die Heizvorrichtung 2 ist auf die Führungen 4a, 4b aufsetzbar und mittels Klemmvorrichtungen 5 fest verbindbar, wobei auch eine Positionierung in Längsrichtung der Führungen 4 durch einen im Gestell 1 angeordneten Stift 6, welcher in eine entsprechende Ausnehmung 7 der Heizvorrichtung 3 eingreift, gegeben ist.

Die Heizvorrichtung 2 besteht, wie aus Fig. 2 ersichtlich, aus einem Unterteil 20 mit einer im Querschnitt halbkreisförmigen Aufnahme 21a für die zu verschweissenden, rohrförmigen Teile 8 und einem Oberteil 22 mit einer entsprechenden Aufnahme 21b. Das Oberteil 22 ist mittels eines Drehgelenkes 23 aufklappbar mit dem Unterteil 20 verbunden und mittels einer Spannvorrichtung 24 gegenseitig verspannbar.

Die Spannvorrichtung 24 weist eine mittels eines Drehgriffes 25 drehbaren Exzenter-Scheibe 26 auf, deren exzentrische Innen-Spannfläche 26a mit einem Spannbolzen 27 des Unterteils 20 zusammenwirkt. Jede der beiden Aufnahmen 21a, 21b weist, wie aus Fig. 3 ersichtlich, eine mittig angeordnete, elektrisch heizbare Backe 28, beidseitig davon Haltebacken 29 sowie Seitenwände 30 auf, welche jeweils am Gehäuse 20a bzw. 22a des Unter- bzw. Oberteils 20 bzw. 22 befestigt sind.

Die aus einem schlecht wärmeleitenden Material, wie z.B. aus einem rostfreien Stahl bestehenden Haltebacken 29 sind mittels Schrauben 31 und Distanzbolzen 32 an den Seitenwänden 30 befestigt, wobei die heizbare Backe 28 zwischen den Haltebacken 29 von diesen fest gehalten ist. Die aus einem gut wärmeleitenden Material, wie z.B. Kupfer, bestehenden Backen 28 weisen jeweils eine elektrische Heizpatrone 33 oder eine andere elektrische Heizvorrichtung auf. Die Innenwände der Gehäuse 20a, 22a und die Seitenwände 30 bilden einen die heizbaren Backen 28 und die Haltebacken 29 umgebenden, gemeinsamen Kanal 34, durch welchen mittels eines Ventilators 9 erzeugbare Kühlluft geleitet wird. Der Ventilator 9 ist direkt unter der Heizvorrichtung 2 im kastenförmigen Gestell 1 angeordnet und mittels eines Elektromotors 10 antreibbar (siehe Fig. 1 und 2).

Die Seitenwände 30 weisen am Innenumfang eine Ausdrehung 35 auf, welche in Form und Grösse den Wülsten entsprechen, welche an denen als Fittings ausgebildeten, zu verschweissenden, rohrförmigen Teilen 8 angeordnet sind. Dadurch werden die Fittings in axialer Richtung in richtiger Position gehalten.

Für jede zu verschweissende Durchmesser-Dimension der rohrförmigen Teile ist eine auf das Gestell aufsestzbare, eigene Heizvorrichtung 2 vorgesehen, welche vorzugsweise für die Normdurchmesser 16, 20, 25, 32, 40, 50 und 65 mm ausgebildet ist. Für jede der Heizvorrichtungen 2 ist am Gestell 1 ein elektrischer Schalter 11 zugeordnet, welche in Längsrichtung der Führungen 4 nebeneinander angeordnet sind.

Beim Aufsetzen der Heizvorrichtung 2 für eine bestimmte Durchesserdimension wird durch einen an dieser fest angeordneten Stift 36 jeweils ein zu dieser Heizvorrichtung zugehöriger Schalter 11 betätigt, wodurch ein für diese Dimension festgelegtes Heizprogramm einer Programmsteuerung 12 eingestellt wird. Die Programmsteuerung 12 ist im Gestell 1 angeordnet und mit einem frontseitig angeordneten, weiter nicht dargestellten Bedienungspult, wirkverbunden.

Im Gestell 1 ist ausserdem ein elektrisch antreibbarer Kleinkompressor 14 angeordnet (schematisch in Fig. 1 dargestellt), welcher zur Erzeugung von Druckluft für eine aufweitbare Stützvorrichtung 15 vorgesehen ist. Die Stützvorrichtung 15 ist als Blase ausgebildet und mittels einer Luftleitung 16 mit dem Kompressor verbunden. Ein in der Luftleitung 16 angeordneter Druck-Sensor 17 ist über ein Druckeinstellgerät mit der Programmsteuerung wirkverbunden und gewährleistet, dass während des Schweissvorganges der eingestellte, erforderliche Druck in der Blase aufrecht erhalten bleibt. Bei Druckabfall wird automatisch der Kompressor eingeschaltet.

Jede Rohrspannvorrichtung 3 weist ein an einem Unterteil 40 mittels eines Drehgelenkes 23 aufklappbar befestigtes Oberteil 41 auf, wobei in beiden Teilen auswechselbare, halbschalenförmige Spannbacken 42 angeordnet sind. Für jede zu verschweissende Durchmesser-Dimension werden dann die entsprechenden Spannbacken 42 in dem Unterteil 40 und Oberteil 41 eingesetzt und befestigt. Die Spannvorrichtung 24 zum Zusammenspannen des Unter- und Oberteils 40, 41 ist gleich ausgebildet wie die Spannvorrichtung bei der Heizvorrichtung 2.

Die elektrischen Heizpatronen 33 in den Heizvorrichtungen 2 weisen je einen Thermofühler 37 auf und sind mit der Programmsteuerung 12 wirkverbunden.

Die Programmsteuerung weist zu jedem elektrischen Schalter 11 ein zugehöriges Einstellelement für die Einstellung einer bestimmten Heizleistung auf.

Die Heizleistung wird durch Integration der gemessenen Temperatur an der Heizvorrichtung über die Zeit bestimmt, wobei die Integration ab einer einstellbaren Temperatur, wie z.B. 210°C beginnt.

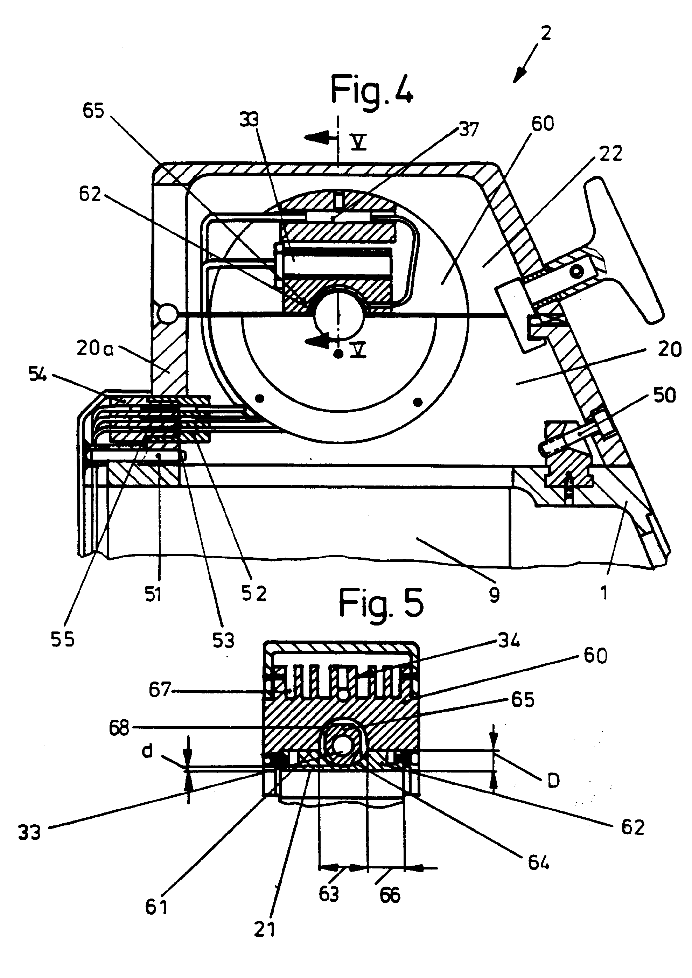

Die Fig. 4 und 5 zeigen eine Ausführungsvariante der Heizvorrichtung 2, welche ebenfalls auf ein Gestell 1 aufsetzbar und mittels eines Stiftes 51 und einer Klemmvorrichtung 50 in positionierter Lage mit dem Gestell 1 verbindbar ist. Im Gehäuse 20a des Unterteiles 20 ist ein Steckerteil 52 angeordnet, welcher Steckkontakte 53 aufweist.

Ein zweites Steckerteil 54 mit zu den Steckkontakten 53 korrespondierenden Steckkontakten 55 wird nach dem Aufsetzen der Heizvorrichtung 2 in den Steckerteil 52 bei gleichzeitiger Zentrierung am Stift 51 eingesteckt. Jeder der Steckerteile 52, 54 weist vorzugsweise fünfzehn Steckkontakte 53 bzw. 55 auf, wobei jeweils vier für die beiden Heizpatronen 33 und vier für die beiden Thermofühler 37 vorgesehen sind und deren Verbindung mit der Programmsteuerung 12 herstellen, sieben Steckkontakte sind für die Codierung der für die unterschiedlichen Durchmesser-Dimensionen erforderlichen, verschiedenen Heizvorrichtungen 2 vorgesehen, wodurch jeweils das für die entsprechende Durchmesser-Dimension erforderliche Schweissprogramm in der Programmsteuerung 12 aktiviert wird. Diese Steckkontakte ersetzen die zu den Fig. 1 - 3 beschriebenen, elektrischen Schalter 11 und den Stift 36, wodurch die Einrichtung vereinfacht wird.

Im Unter- und im Oberteil 20 bzw. 22 der Heizvorrichtung 2 ist jeweils ein Halteteil 60 befestigt, in welchem jeweils in einer Ausdrehung 61 zentriert eine Heizbacke 62 angeordnet ist.

Die Heizbacke 62 weist im mittleren Bereich 63 durch eine Ausnehmung 64 eine zur Aufnahme 21 dünne Wandstärke für einen guten Wäremedurchgang von der Heizpatrone zur Schweisstelle auf.

In der Ausnehmung 64 ist ein Heizteil 65 vorzugsweise aus Kupfer angeordnet und durch Lötung mit der aus einer aus rostfreiem Stahl bestehender Heizbacke 62 fest verbunden. In dem Heizteil 65 ist die Heizpatrone 33 und der Thermofühler 37 eingesteckt angeordnet. Durch die Form der Ausnehmung 64 im Querschnitt kann der Temperaturverlauf im mittleren Bereich 63 - der sog. Heizzone festgelegt werden, wobei die beidseitigen Bereiche 66 - welche die Temperierzonen sind, durch die grössere Wandstärke D weniger stark aufgeheizt werden.

Am Aussenumfang des Halteteils 60 sind Ausnehmungen 67 angeordnet, welche den Kanal 34 für die Durchleitung der vom Ventilator 9 erzeugten Kühlluft bilden.

Am Innenumfang des Halteteils 60 ist mittig zur Aufnahme des Heizteils 65 eine Ausnehmung 68 angeordnet, durch welche zur raschen Abkühlung des Heizteiles 65 und somit der Schweissverbindung ebenfalls Kühlluft durchgeleitet wird.

Die übrige Ausgestaltung der Einrichtung dieser Ausführungsvariante entspricht der zu dem Fig. 1 bis 3 beschriebenen Einrichtung.

Der Schweissvorgang erfolgt, wie nachstehend beschrieben.

Zu der Durchmesser-Dimension der zu verschweissenden Rohre bzw. Fittings wird die entsprechende Heizvorrichtung 2 auf die Führungen 4 aufgesetzt und bei den Rohrspannvorrichtungen 3 werden die entsprechenden Spannbacken 42 eingesetzt. Rohre bzw. Fittings werden in die Heizvorrichtung und eventuell bei Rohren in die Rohrspannvorrichtung eingelegt und durch Verspannen der Oberteile 22 bzw. 41 gegen die Unterteile 20 bzw. 40 mittels den Spannvorrichtungen 24 fest eingespannt.

Durch Aufsetzen der Heizvorrichtung 2 sind die entsprechenden Schweissparameter automatisch durch Schaltung des entsprechenden Elektro-Schalters 11 oder durch die Steckkontakte 53,55 eingestellt. Beim Einsetzen der Rohre bzw. Fittings wird im Innenraum die Blase 15 im Bereich der Schweissverbindung angeordnet. Durch Drücken der "Start"-Taste wird folgender belauf automatisch ausgelöst:

1. Die Blase wird durch Einschaltung des Kompressors unter Druck gesetzt.

2. Die Heizung wird eingeschaltet, wobei die eingestellte maximale Temperatur (200 bis 300°C) ohne Ueberschwingen rasch erreicht wird. Die erforderliche Heizenergie pro Dimension wurde vor dem Schweissvorgang eingestellt. Die Heizenergie-Integration fängt bei ca. 210°C an.

3. Ausschaltung der Heizung nach Erreichen der eingestellten Heizenergie.

4. Einschalten des Kühlluft-Ventilators, bis eine einstellbare Temperatur von ca. 90°C erreicht ist.

5. Ausschalten der Kühlluftzufuhr. Gleichzeitig erfolgt die Druckentlastung der Blase.

6. Schweissvorgang ist abgeschlossen. Die geschweissten Rohre bzw. Fittings werden aus der Einrichtung herausgenommen und die Blase herausgezogen.

Die Einrichtung ist zur Herstellung der nächsten Schweissverbindung bereit.

## Patentansprüche

1. Einrichtung zur Herstellung einer Schweissverbindung von rohrförmigen Teilen aus Kunststoff, deren Verbindungsenden axial ausgerichtet mit ihren Stirnflächen aneinanderliegend gehalten werden, mit einer die rohrförmigen Teile umschliessenden und aufklappbaren Heizvorrichtung (2) mit elektrisch aufheizbaren und kühlbaren Backen (28, 62) sowie mit einer im Inneren der rohrförmigen Teile angeordneten Stützvorrichtung (15), dadurch gekennzeichnet, dass für jede zu verschweissende Rohrdurchmesser-Dimension eine auf ein Gestell (1) in poitionierter Lage befestigbare Heizvorrichtung (2) vorgesehen ist, wobei jeder Heizvorrichtung (2) elektrische Kontakte (53, 55, 11) zugeordnet sind mittels welchen beim Aufsetzen der Heizvorrichtung (2) auf das Gestell ein jeweils der Dimension entsprechend vorgegebenes Schweissprogramm einer Programmsteuerung (12) auswählbar ist und dass die elektrisch heizbaren Backen (28, 62) von einem gemeinsamen Kanal (34) umgeben sind, welcher mit einem Kühlluft erzeugenden Ventilator (9) wirkverbunden ist, wobei der Ventilator (9) im Gestell (1) direkt unterhalb der Heizvorrichtung (2) angeordnet ist.

2. Einrichtung nach Anspruch 1, dadurch gekennzeichent, dass jedem Schweissprogramm eine über eine einstellbare Zeit veränderbare Heizenergie-Zufuhr zugeordnet ist.

3. Einrichtung nach einem der Ansprüche 1 oder 2, dadurch gekennzeichnet, dass im Gestell (1) ein elektrisch antreibbarer Kompressor (14) zur Erzeugung von Druckluft angeordnet ist.

4. Einrichtung nach Anspruch 3, dadurch gekennzeichnet, dass der Kompressor (14) mittels einer Luftleitung (16) mit einer durch Druckluft aufweitbaren, als Blase ausgebildeten Stützvorrichtung (15) verbunden ist.

5. Einrichtung nach einem der Ansprüche 1 bis 4, dadurch gekennzeichnet, dass die Heizbacken (28) mittels elektrischer Heizpatronen (33) aufheizbar sind und Thermofühler (37) aufweisen, welche mit der Programmsteuerung (12) wirkverbunden sind.

6. Einrichtung nach einem der Ansprüche 1 bis 5, dadurch gekennzeichnet, dass die elektrischen Kontakte (53, 55) in einem Gestell (1) angeordneten ersten Steckerteil (54) und jeweils in einem an den unterschiedlichen Heizvorrichtungen (2) angeordneten zweiten Steckerteil (52) angeordnet sind.

## Claims

1. Device for producing a welding connection of tubular plastic parts, the connection ends of which are held in axial alignment with their faces abutting one another, with a heating device (2) enclosing the tubular parts and hinged, with jaws (28, 62) which can be heated electrically and cooled, and with a supporting device (15) arranged in the inside of the tubular parts, characterized in that for each pipe diameter dimension to be welded there is provided a heating device (2) which can be fastened on a stand (1) in the positioned state, with electrical contacts (53, 55, 11) being associated with each heating device (2), by means of which, when the heating device (2) is attached to the stand, a welding programme of a programme controller (12) can be selected, the welding programme being appropriately specified for the dimension in each case, and that the electrically heatable jaws (28, 62) are surrounded by a common channel (34) which is operatively connected to a ventilator (9) generating cooling air, with the ventilator (9) being arranged in the stand (1) directly beneath the heating device (2).

2. Device according to claim 1, characterized in that with each welding programme there is associated a supply of heating energy which can be varied over an adjustable period.

3. Device according to one of claims 1 or 2, characterized in that a compressor (14) for generating compressed air is arranged in the stand (1), the compressor being capable of being driven electrically.

4. Device according to claim 3, characterized in that the compressor (14) is connected by means of an air line (16) to a supporting device (15) which can be expanded by compressed air and is constructed as a bladder.

5. Device according to one of claims 1 to 4, characterized in that the heating jaws (28) can be heated by means of electrical heating cartridges (33) and have thermal sensing elements (37) which are operatively connected to the programme controller (12).

6. Device according to one of claims 1 to 5, characterized in that the electrical contacts (53, 55) are arranged in a first plug part (54) arranged on the stand (1) and in each case in a second plug part (52) arranged on the different heating devices (2).

## Revendications

1. Dispositif de fabrication d'une liaison soudée de pièces tubulaires en matière synthétique, dont les extrémités de liaison sont maintenues, alignées axialement, avec leur surface frontale en appui l'une sur l'autre, avec un dispositif de chauffage (2), entourant les pièces tubulaires et susceptible d'être rabattu, comportant des mâchoires (28, 62) susceptibles d'être chauffées et refroidies, ainsi qu'avec un dispositif d'appui (15), disposé à l'intérieur des pièces tubulaires, caractérisé en ce que, pour chaque valeur du diamètre de tube à souder, est prévu un dispositif de chauffage (2) susceptible d'être fixé sur un bâti (1) en une position fixé par positionnement, des contacts électriques (53, 55, 11) étant associés à chaque dispositif de chauffage (2), au moyen desquels est susceptible d'être sélectionné un programme de soudage prédéterminé, correspondant à chaque valeur de diamètre, d'une commande programmable (12), lors de l'application du dispositif de chauffage (2) sur le bâti, et que les mâchoires (28, 62) susceptibles d'être chauffées électriquement sont entourées par un canal (34) commun, relié fonctionnellement à un ventilateur (9) qui fournit un air de refroidissement, le ventilateur (9) étant disposé dans le bâti (1), directement au-dessous du dispositif de chauffage (2).

2. Dispositif selon la revendication 1, caractérisé en ce qu'un apport d'énergie, modifiable sur une durée réglable, est associé à chaque programme de soudage.

3. Dispositif selon l'une des revendications 1 ou 2, caractérisé en ce qu'un compresseur (14) à entraînement électrique pour la fourniture d'air comprimé est disposé dans le bâti (1).

4. Dispositif selon la revendication 3, caractérisé en ce que le compresseur (14) est relié à un dispositif d'appui (15), réalisé sous forme de bulle, extensible par gonflage à l'air comprimé, au moyen d'une conduite d'air (16).

5. Dispositif selon l'une des revendications 1 à 4, caractérisé en ce que les mâchoires de chauffage (28) sont susceptibles d'être chauffées au moyen de cartouches chauffantes (33) électriques et présentent des sondes de température (37) reliées fonctionnellement à la commande programmable (12).

6. Dispositif selon l'une des revendications 1 à 5, caractérisé en ce que les contacts électriques (53, 55) sont disposés dans une première partie de prise (54) disposée dans un bâti (1) et respectivement dans une deuxième partie de prise (52), disposée sur les différentes dispositifs de chauffage (2).

Fig.1

Fig. 2

Fig. 3

8

# Fig.4

# Fig. 5